Europäisches Patentamt

(19) European Patent Office

Office européen des brevets

(11) Numéro de publication: **0 048 188**
**B1**

(12) **FASCICULE DE BREVET EUROPEEN**

(45) Date de publication du fascicule du brevet: **19.06.85**

(51) Int. Cl.⁴: **B 65 G 43/02**

(21) Numéro de dépôt: **81401251.4**

(22) Date de dépôt: **31.07.81**

(54) Installation pour la surveillance d'un convoyeur à tapis sans fin.

(30) Priorité: **30.07.80 FR 8016836**

(43) Date de publication de la demande:
**24.03.82 Bulletin 82/12**

(45) Mention de la délivrance du brevet:
**19.06.85 Bulletin 85/25**

(84) Etats contractants désignés:
**AT BE CH DE FR GB IT LI LU NL SE**

(56) Documents cités:
**DE-B-1 057 967**
**FR-A-2 256 090**

**WESCON TECHNICAL PAPERS, no. 18, 1974, Western Periodicals NORTH HOLLYWOOD (US) A.J. WEISSBERGER: "Microprocessors as intelligent remote controllers", pages 1-4**

(73) Titulaire: **SOCIETE METALLURGIQUE LE NICKEL - S.L.N.**
**Tour Maine-Montparnasse 33, avenue du Maine**
**F-75751 Paris Cedex 15 (FR)**

(72) Inventeur: **Oriol, Marcel**
**85, boulevard Jean-Jaurès**
**F-92100 Boulogne (FR)**

(74) Mandataire: **Ricalens, François**
**MINEMET RECHERCHE B.P. 106 1, avenue Albert Einstein**
**F-78191 Trappes Cedex (FR)**

Courier Press, Leamington Spa, England.

## Description

L'invention concerne une installation pour la surveillance d'un conveyor à tapis sans fin.

On connaît déjà des convoyeurs à tapis sans fins de très grande longueur (plusieurs dizaines de kilomètres) qui assurent le transport d'un minerai, par exemple depuis la mine jusqu'à un port d'embarquement.

Il est donc très important de surveiller en permanence l'état du tapis sans fin afin de détecter une déchirure longitudinale et d'arrêter le convoyeur pour procéder à la réparation du tapis, avant que la déchirure ne se soit prolongée sur toute sa longueur.

A cet effet, il a déjà proposé par FR—A—2 256 090, une installation der surveillance de l'état d'un tapis sans fin d'un convoyeur, l'installation comprenant des boucles conductrices fermées qui sont réparties, en positions espacées, sur le tapis et montées transversalement sur ce tapis. Plusieurs postes de surveillance fixes, appelés postes détecteurs ou sites détecteurs, sont répartis, en positions espacées, le long de la trajectoire du tapis et sont chacun équipés d'un circuit détecteur destiné à détecter les passages des boucles en regard de chaque poste détecteur. Tous les postes détecteurs sont reliés à un poste central, afin de transmettre des signaux comprenant une information sur l'état des boucles et sur l'état du poste détecteur correspondant. Le poste central comprend une unité centrale, qui est un circuit de contrôle de site, destinée à recevoir ces signaux, ainsi que des moyens de commande de l'arrêt du tapis, reliés à l'unité centrale et commandant l'arrêt du tapis lorsque des signaux correspondants à des boucles défectueuses ou à des circuits détecteurs défectueux ont été reçus, et enfin des moyens de visualisation, constitués par des lampes reliées à l'unité centrale est destinées à indiquer l'état des boucles. Le poste central comprend enfin des moyens de commande manuelle, sous la forme d'un commutateur-sélecteur d'un circuit de saut de boucle, pour inhiber au moins un signal correspondant à une boucle défectueuse ou à un poste détecteur défectueux, ainsi que des moyens automatiques, sous la forme d'une circuit de shuntage automatique d'un circuit défaillant, pour autoriser la poursuite du fonctionnement du convoyeur même après que des boucles défectueuses ou des circuits détecteurs défectueux ont été détectés, pourvu que les moyens de commande manuelle aient été actionnés de manière correspondante.

Dans l'installation de ce type, décrite dans FR—A—2 256 090, chaque boucle s'étend sur toute la largeur du tapis, et le commutateur de sélection peut être positionné pour commander l'arrêt du tapis lorsque trois boucles consécutives sont détectées comme étant défectueuses. De plus, chaque circuit détecteur est relié au poste central par sa propre ligne individuelle de sortie des signaux, et l'état des boucles qui passent en regard d'un circuit détecteur donné est visualisé par des moyens d'affichage, sous la forme d'une paire de lampes qui sont particulières à ce circuit détecteur, et il ne se trouve qu'une seule paire de lampes reliées au circuit automatique de shuntage de circuit défaillant, pour visualiser l'état de tous les circuits détecteurs, de l'unité centrale et même des circuits d'alimentation en puissance.

Une tell installation présente de nombreux inconvénients, qui découlent de la liaison de chaque circuit détecteur au poste central par une ligne individuelle, du grand nombre de paires de lampes témoin à surveiller, de l'absence de moyens d'affichage individualisés de défaillances des circuits détecteurs, et surtout du fait qui chaque boucle s'étend sur toute la largeur du tapis.

Afin de rémédier à certains inconvénients d'une telle installation, il a déjà été prévu de répartir, le long du tapis et à l'intérieur de celui-ci, des paires de boucles conductrices fermées, les boucles de chaque paire étant disposées transversalement au tapis, de façon que ces boucles puissent être détectées par des paires de capteurs réparties le long du convoyeur.

Ainsi, lorsqu'en un point du convoyeur, on détecte le passage des deux boucles, cela signifie qu'à ce point, le tapis ne présente pas une déchirure, car cette déchirure aurait coupé au moins l'une des boucles.

Par contre, si l'un seulement des capteurs détecte la présence d'une boucle, on en conclut que l'autre boucle est coupée et que le tapis présente à cet endroit une déchirure. Le convoyeur est alors arrêté immédiatement, et les ouvriers doivent se déplacer vers ce point du convoyeur pour procéder à la réparation du tapis.

Cela se traduit donc par des pertes de temps et de rentabilité importantes à des moments imprévus.

Ces installations connues comportent également des moyens qui permettent de détecter la coupure des deux boucles d'une même paire du tapis sans fin. En effet, en l'absence de ces moyens supplémentaires, les deux boucles d'une paire étant coupées, aucun signal n'est produit à leur passage en regard des paires de capteurs réparties le long du convoyeur, et on ne peut pas détecter si c'est la double déchirure du tapis qui a entraîné cette coupure des boucles.

Pour éviter cet inconvénient, il a alors été prévu de munir le tapis en amont de chaque paire de boucles, d'un moyen supplementaire tel qu'un aimant permanent qui signale à l'installation la proximité de l'apparition d'une paire de boucles. Si l'installation ne détecte pas le passage de cette paire de boucles dans une délai déterminé, on peut alors conclure que les deux boucles de la bande sont coupées en ce point du convoyeur. Cependant, dans ce cas, il convient également d'arrêter immédiatement la bande avec, comme conséquence, une perte de rendement résultant du temps nécessaire à la réparation.

En effet, lorsque la coupure de l'une ou des deux boucles d'une paire à été constatée, il est impossible de remettre en fonctionnement le convoyeur avant réparation car cette coupure de boucle sera automatiquement détectée par la paire de capteurs aval, ce qui déclenchera à nouveau l'arrêt de l'installation.

Une solution consisterait bien entendu à rendre inopérant l'ensemble des capteurs, mais cela n'est pas admissible car, dans ce cas, le convoyeur fonctionne sans aucune surveillance.

La présente invention a notamment pour but de remédier à ces inconvénients, et elle concerne à cet effet une installation de surveillance d'un convoyeur, dont le tapis est muni de boucles de contrôle disposées transversalement par paires et destinées à passer devant des postes de surveillance, l'installation permettant la détection des paires de boucles n'ayant qu'une boucle défectueuse, et simultanément la détection des postes de surveillance qui, soit sont défectueux, soit sont en bon état, mais n'ont pas alors détecté une paire de boucles de contrôle dont les deux boucles sont défectueuses.

Plus précisément, l'invention a pour objet une installation pour la surveillance de l'état d'un tapis sans fin d'un convoyeur entraîné par des moyens d'entraînement du tapis; cette installation comprend:

a°) plusieurs boucles de contrôle, conductrices et fermées, disposées transversalement sur le tapis et réparties le long de ce dernier,

b°) plusieurs postes de surveillance fixes, répartis le long du convoyeur, et couplés chacun à au moins un ensemble détecteur comportant au moins un émetteur et un capteur correspondant pour détecter les passages desdites boucles de contrôle au niveau de chaque poste de surveillance,

c°) un poste central auquel chacun desdits postes de surveillance est relié pour transmettre des signaux comprenant une information sur l'état desdites boucles de contrôle et sur l'état de chacun desdits postes de surveillance, ledit poste central comprenant:

— une unité centrale destinée à recevoir lesdits signaux,
— des moyens de commande de l'arrêt du tapis, reliés à ladite unité centrale et destinés à commander l'arrêt dudit tapis lorsque ladite unité centrale a reçu des signaux correspondant à des boucles défectueuses et/ou des postes de surveillance défectueux,
— des moyens de visualisation reliés à ladite unité centrale et destinés à indiquer l'état desdites boucles de contrôle et desdits postes de surveillance,
— des moyens de commande manuelle, destinés à inhiber, lorsqu'ils sont actionnés, au moins un signal correspondant à une boucle de contrôle défectueuse ou à un poste de surveillance défectueux,
— des moyens automatiques, destinés à autoriser la poursuite du fonctionnement du convoyeur lorsque ladite unité centrale reçoit des signaux correspondant à des boucles de contrôle défectueuses et/ou des postes de surveillance défectueux, après inhibition de ces signaux par lesdits moyens de commande manuelle,

et se caractérise en ce que:

— lesdites boucles de contrôle sont disposées en paires de boucles espacées, les deux boucles de chaque paire étant disposées transversalement sur le tapis,
— chaque ensemble détecteur comporte une paire de couples émetteurs-capteurs, chacun des couples émetteurs-capteurs étant disposé sur le trajet d'un boucle de contrôle de chacune desdites paires de boucles de contrôle afin de délivrer un signal de détection lorsqu'une boucle de contrôle non coupée passe en regard de l'une desdites paires de couples émetteurs-capteurs,
— l'installation comprend de plus plusieurs paires de boucles de référence, conductrices et fermées, qui sont disposées à proximité l'une de l'autre, dans le sens de la longueur sur une portion du tapis, les deux boucles de chaque paire de boucles de référence étant disposées transversalement sur ladite portion de tapis, afin de donner un numéro de référence à chaque poste de surveillance et à chaque paire de boucles de contrôle passant successivement en regard de chaque ensemble détecteur couplé à chaque poste de surveillance,
— chaque poste de surveillance comprend une mémoire tampon destinée à stocker une information sur l'état des boucles d'une paire de boucles de contrôle détectée, et un ensemble de codage destiné à produire lesdits signaux de détection, sous forme codée, chacun desdits signaux de détection codés comprenant ledit numéro de référence du poste de surveillance correspondant et ladite information sur l'état de la paire de boucles de contrôle détectée et correspondante,
— ladite unité centrale dudit poste central comprend une mémoire programmable, émettant, à intervalles réguliers, des signaux de scrutation codés destinés à interroger successivement lesdits postes de surveillance, et recevant successivement en réponse lesdits signaux de détection codés provenant desdits postes de surveillance, dont la mémoire tampon de chacun est vidée en réponse au premier signal de scrutation codé reçu après stockage d'une information correspondant à l'état d'une paire détectée de boucles de contrôle,
— ledit poste central comprend de plus un fichier central, relié à ladite unité et comportant une mémoire active destinée à recevoir, lors de la mise en fonctionnement de l'installation, des informations relatives aux numéros de référence des paires de boucles de contrôle et des postes de surveillance,
— lesdites informations correspondant auxdits numéros de référence et stockées dans ladite mémoire active sont comparées dans ledit poste central auxdites informations contenues dans lesdits signaux de détection codés reçus par ladite unité centrale, de sorte que lesdits moyens de visualisation, qui sont communs à toutes les paires de boucles de contrôle et à tous les postes de surveillance, indiquent successivement les numéros de référence et les états desdites paires de boucles de contrôle ainsi que, successivement, les numéros de référence et les états desdits postes de surveillance,

— ledit fichier central est relié auxdits moyens de commande manuelle, afin d'inhiber toute comparaison d'informations contenues dans un signal de détection codé, et correspondant à un numéro de référence d'une paire de boucles de contrôle ou d'un poste de surveillance dont l'état a été visualisé comme étant défectueux, lorsque lesdits moyens de commande manuelle sont actionnés.

Suivant une autre caractéristique de l'invention, pour la détection du défaut des deux boucles d'une même paire de boucles de contrôle, le poste central comprend de plus des compteurs programmables, destinés à compter les nombres totaux d'impulsions reçues entre des paires de signaux successifs, correspondant à des paires successives de boucles de contrôle provenant de chacun desdits postes de surveillance et reçues par ladite unité centrale, les compteurs étant également destinés à comparer lesdits nombres totaux d'impulsions a des nombres totaux de référence, afin de délivrer, en cas de discordance, des signaux correspondant aux paires de boucles dont les deux boucles sont défectueuses, la mémoire active du fichier central recevant également, lors de la mise en fonctionnement de l'installation, des informations relatives auxdits nombres totaux de référence, qui correspondent aux nombres totaux de signaux de scrutation transmis à chacun des postes de surveillance entre deux signaux de détection codés successifs, correspondant à deux paires successives de boucles de contrôle provenant du poste de surveillance correspondant et reçues par ladite unité centrale, lesdites informations correspondant auxdits nombres totaux de référence et stockées dans ladite mémoire active étant comparées auxdits nombres totaux d'impulsions, dont chacune correspond à un signal de scrutation codé, et qui sont comptées dans les compteurs entre la réception de deux signaux détection codés successifs, correspondant à deux paires successives de boucles de contrôle détectées, de sorte que lesdits moyens de visualisation indiquent, en cas de discordance, soit le numéro d'une poste de surveillance qui est en bon état et n'a pas détecté le passage d'une paire de boucles dont les deux boucles sont défectueuses, soit le numéro d'un poste de surveillance qui est en mauvais état.

Suivant une autre caractéristique de l'invention, le poste central comporte de plus une horloge, déterminant les intervalles réguliers d'émission des signaux de scrutation, et une base de temps interne reliée à l'horloge afin de produire des signaux de scrutation lorsque le tapis a une vitesse constante.

Selon une variante, l'horloge est reliée à une dynamo tachymétrique entraînée par les moyens d'entraînement du tapis, afin de produire des signaux de scrutation dont la fréquence est proportionnelle à la vitesse du tapis.

Avantageusement, chaque poste de surveillance comporte un circuit analogique destiné à traiter les signaux issus des capteurs et comprenant un étage retardateur-comparateur destiné à différencier les signaux permanents entre les capteurs et les émetteurs correspondants des signaux produits par les passages des boucles de contrôle en regard des capteurs, pour suivre les variations lentes de niveau du tapis sans fin.

Avantageusement également, chaque poste de surveillance est couplé à deux ensembles détecteurs dont l'une a sa paire de couples émetteurs-capteurs disposée en position adjacente au brin supérieur du tapis sans fin, et l'autre ensemble détecteur a sa paire de couples émetteurs-capteurs disposée en position adjacente au brin inférieur du tapis sans fin, les moyens de visualisation donnant une indication du brin supérieur ou inférieur du tapis sur lequel une détection a été effectuée.

Enfin, selon une autre caractéristique avantageuse propre à l'invention, tous les postes de surveillance sont reliés au poste central par une unique ligne téléphonique commune et normalisée, qui transmet les signaux de scrutation et les signaux de détection codés.

L'invention est représentée à titre d'exemple non limitatif sur les dessins ci-joints dans lesquels:

— la figure 1 représente en perspective schématique l'ensemble de l'installation conforme à l'invention;
— la figure 2 représente sous la forme d'un schéma synoptique l'une des postes de surveillance et le poste central de la figure 1.

La présente invention a, en conséquence, pour but la réalisation d'une installation de surveillance de l'état d'un convoyeur, qui permette de détecter la présence de déchirures sur le tapis sans fin, cette détection n'entraînant cependant pas un arrêt obligatoire du convoyeur et permettant, au contraire, la poursuite de son fonctionnement, le convoyeur étant, dans ce cas, toujours sous surveillance sauf par la paire de boucles défectueuses dont le défaut a été constaté et qui est inhibée

Ainsi, il est possible de surseoir à une réparation du tapis afin de reporter cette réparation à un moment plus opportun au cours duquel il pourra être procédé simultanément à la réparation de plusieurs boucles défectueuses.

Egalement, la présente invention a pour but de permettre la détection de la coupure des deux boucles d'une même paire sans prévoir de moyen supplémentaire de contrôle sur la bande elle-même.

Un autre but de l'invention réside dans le fait qu'elle permet d'éviter les erreurs de détection des boucles par suite d'un déplacement vertical ou latéral du tapis sans fin sur les supports du convoyeur.

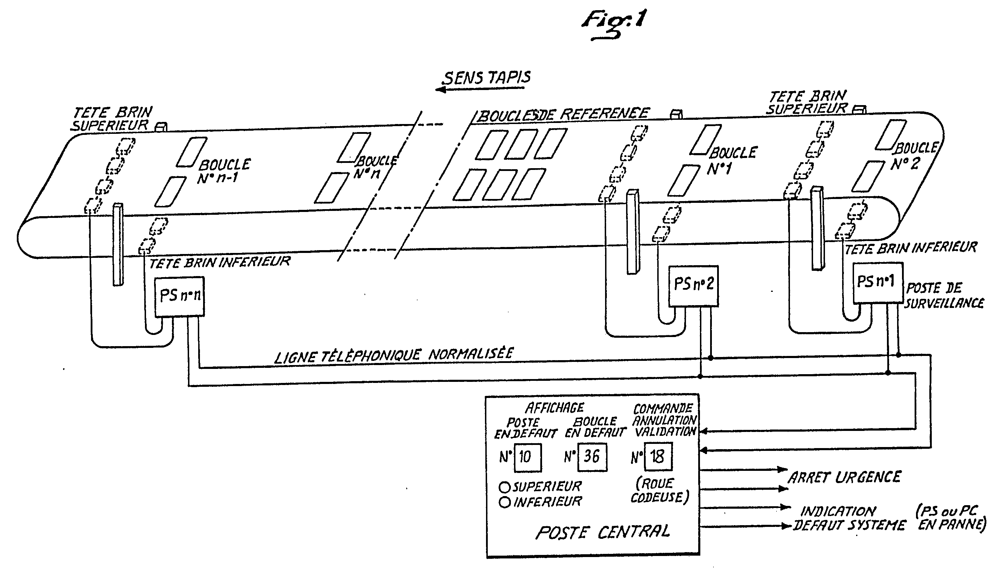

Comme représenté sur la figure 1, le tapis sans fin T est pourvu de plusieurs paires ($B_1$, $B_2$, $B_n$) de boucles, qui sont insérées dans le tapis et réparties de manière quelconque sur sa longueur (tous les 1 000 m par exemple), les boucles de chaque paire étant disposées transversalement au tapis.

Le long de ce tapis sans fin, sont également répartis de manière quelconque des postes de surveillance PS1, PS2 ... PSn, qui sont reliés en parallèle sur un ligne téléphonique aboutissant à un poste central PC.

Chaque poste de surveillance PS est relié à des détecteurs constitués chacun par des paires de couples émetteurs-capteurs E1—C1; E2—C2, qui sont disposés chacun sur le trajet d'une boucle des paires de boucles afin de produire un signal de détection lorsqu'une boucle non coupée passe à hauter de l'une des couples.

Chaque poste de surveillance placé le long du convoyeur est de préférence relié à deux paires de couples émetteurs-capteurs, l'une de ces paires étant disposée à proximité du brin supérieur du tapis, l'autre à proximité du brin inférieur afin que l'on puisse doubler la surveillance effectuée par chaque poste de surveillance.

En un point du tapis sans fin T sont également disposées de manière groupée plusieurs paires de boucles conductrices fermées (par exemple trois paires R1, R2, R3, distantes de 50 m les unes des autres), et qui sont destinées à servir de référence pour permettre la numérotation des paires ($B_1$, $B_2$, $B_n$, ect ... ) de boucles qui passent successivement devant chaque poste de surveillance.

Les moyens d'entraînement (non représentés) du tapis sans fin de convoyeur sont également en liaison avec une dynamo tachymétrique D, qui est destinée à produire une tension proportionnelle à la vitesse de déplacement du tapis sans fin. Les fonctions réalisées à partir de cette tension seront expliquées par la suite.

Sur le poste central sont prévus des moyens d'affichage permettant de visualiser soit le numéro du poste en défaut, soit le numéro de la paire de boucles en défaut, avec indication du brin supérieur ou du brin inférieur sur lequel a été constaté ce défaut.

Egalement, ce poste central comporte une commande manuelle permettant l'annulation ou la validation du contrôle effectué par une paire de boucles B1, B2, etc. ... du tapis sans fin.

Dans l'exemple représenté sur la figure 1, on constate ainsi que le poste de surveillance portant le numéro 10 est défectueux et que l'une des boucles de la paire de boucles n° 36 détectée sur le brin inférieur ou sur le brin supérieur est coupée.

En outre, ce poste central indique par la roue codeuse de la commande d'annulation-validation que la paire de boucles n° 18 va être inhibée.

Ce poste central est également relié aux moyens qui permettent d'arrêter le fonctionnement du convoyeur et à des moyens de visualisation indiquant l'existence d'un défaut sur un poste de surveillance ou sur le poste central.

Le fonctionnement de cette installation est le suivant;

La détection du passage des paires de boucles est assurée par les postes de surveillance PS répartis le long du convoyeur. Ces postes de surveillance sont interrogés à tour de rôle par le poste central PC auquel ils fournissent les informations relatives à l'état des boucles au moment de leur passage devant chaque poste de surveillance.

La fréquence de ces scrutations des postes de surveillance est déterminée par une horloge qui est alimentée soit par une base de temps interne, soit à partir de la dynamo tachymétrique D par l'intermédiaire d'une interface. La base de temps interne sera mise en oeuvre si le tapis a une vitesse de défilement constante, alors que l'horloge sera entraînée à partir du signal produit par la dynamo tachymétrique si le tapis peut être entraîne à des vitesses variables.

A chaque passage de boucles en bon état, les capteurs C1, C2, envoient un signal HF à un circuit analogique de traitement de ces signaux HF.

Le circuit analogique de traitement des signaux HF effectue tout d'abord, dans un étage retardateur-comparateur une différentiation entre le rayonnement HF provoqué par une boucle au moment de son passage devant un capteur et un rayonnement permanent déterminé entre l'émetteur et le capteur, et cela afin d'assurer une protection vis-à-vis des perturbations extérieures.

Cet étage retardateur-comparateur est également établi afin d'éviter la production de signaux incorrects qui pourraient résulter d'une modification de la distance des boucles de contrôle par rapport aux capteurs, par suite d'un soulèvement local du tapis sans fin par rapport à ses rouleaux porteurs.

A cet effet, le signal provenant de chaque capteur est tout d'abord filtré, amplifié et transformé en une tension continue proportionnelle au champ reçu par le capteur. Cette tension continue est alors amenée, d'une part, directement sur l'une des entrées d'un comparateur, d'autre part, sur la seconde entrée de ce comparateur par l'intermédiaire du retardateur qui présente une constante de temps suffisamment grande pour suivre les variations lentes de niveau du tapis sans fin.

La comparaison de ces deux tensions permet alors de détecter le passage d'une boucle, qui provoque une augmentation rapide de tension, en évitant la confusion avec les variations du champ magnétique résultant d'un déplacement vertical du tapis.

Le signal de détection du passage d'une boucle transformé en information logique est ensuite appliqué au circuit logique d'acquisition afin d'être normalisé avant d'être stocké dans une mémoire tampon.

La mémoire tampon conserve les informations jusqu'à ce que le signal de scrutation émanant du poste central donne l'ordre de transfert vers un circuit logique de transmission chargé de normaliser les signaux "état de boucles" avant codage.

La fréquence de ces scrutations (un scrutation toutes les 0,5 secondes, par exemple) est déterminée, comme déjà indiquée par l'horloge, soit à partir de la base de temps interne, soit à partir de la dynamo tachymétrique.

L'interface ligne émission-réception permet la transmission des informations codées sur la ligne téléphonique dans les deux sens aller et retour.

Les informations codées émanant de tous les postes de surveillance sont transmises en série par une seule ligne téléphonique au poste central. Le poste central comporte à l'entrée, comme le poste de surveillance, un circuit interface émission-réception permettant la transmission des informations codées sur la ligne téléphonique dans les deux sens.

Les informations codées sont d'abord appliquées dans un circuit logique de transmission chargé de la normalisation avant d'être envoyées au circuit de décodage permettant de faire apparaître et de séparer les informations relatives à "l'état boucle" et à "l'état poste".

Les signaux "état boucle" et "état poste" sont alors appliqués à un circuit d'analyse-sélection ayant pour objet de reconnaître tout d'abord les signaux de poste de surveillance PS et le signal produit par l'ensemble de référence constitué par les paires (R1, R2 et R3) de boucles.

Ce circuit d'analyse sélection assure ensuite à l'aide des compteurs programmables la numérotation des paires de boucles par rapport aus paires (R1, R2, R3) de boucles de l'ensemble de référence et il fournit les quatre informations de base permettant la gestion de l'installation et relatives à l'état des paires ($B_1$, $B_2$, $B_n$ ...) de boucles de contrôle à l'état des postes de surveillance PS1, PS2, etc ..., au numéro de ces boucles de contrôle et au numéro des postes de surveillance.

Les quatre informations d'état de boucle, d'état de poste et leur numéro respectif sont transmises à l'unité centrale UC par l'intermédiaire de la commande d'accès chargée de la régulation des entrées.

L'unité centrale est essentiellement une mémoire programmable dans laquelle est inscrit de façon définitive le programme de la gestion assurée par un microprocesseur. Le programme de l'unité centrale est défini pour une installation donnée, en fonction des critères de surveillance souhaités. En particulier, nombre de postes, nombre de boucles, espacement des boucles, distance minimum et maximum, nombre de scrutations, seuil des alarmes, etc. ...

L'unité centrale fonctionne en liaison avec le fichier central qui est une mémoire active contenant les informations relatives à la disposition physique des éléments de l'installation, tell qu'elle est définie à la mise en route, c'est-à-dire numérotation des postes de surveillance sur le terrain et numérotation des boucles sur la bande.

Les informations contenues dans le fichier central peuvent être modifiées à tout moment, même en cours d'exploitation à l'aide d'une commande manuelle "annulation-validation". Il est donc possible d'annuler les postes de surveillance et/ou les boucles en défaut et de poursuivre l'exploitation sans gêne puis de les remettre en service quand ils ont été remis en état de marche. Il est également possible d'ajouter des postes de surveillance ou des boucles en plus de ceux ou celles mis au départ et cela dans les limites de la capacité de la mémoire définie par le fichier et à condition que ces adjonctions entrent dans le cadre du programme de l'unité centrale défini pour l'installation.

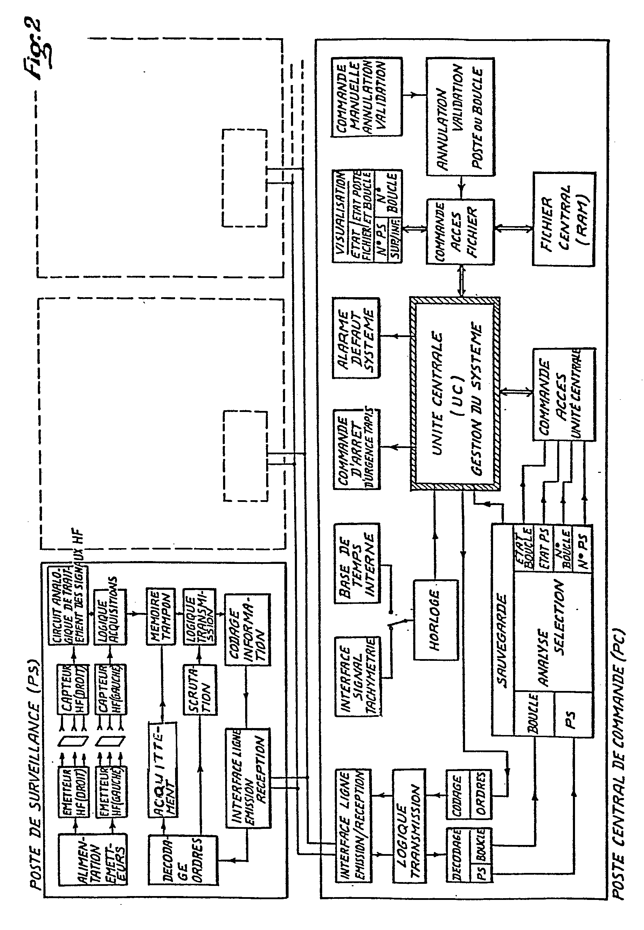

Le fonctionnement de l'unité centrale tel qu'il résulte du schéma synoptique de la figure 2 est la suivant:

L'unité central déclenche de façon permanente à une fréquence déterminée par l'horloge les ordres de scrutation de l'ensemble des postes de surveillance PS.

Chaque poste de surveillance est interrogé à tour de rôle et répond au code adresse qui lui est propre. Lorsqu'un poste de surveillance considéré reconnaît son code adresse, il délivre un signal de reconnaissance et fournit l'information contenue dans sa mémoire relative à l'état de la dernière paire de boucles de contrôle qui est passée dans son champ de surveillance.

Ces informations qui sont traitées, numérisées, codées, décodées, etc. ... sont acheminées jusqu'à l'unité centrale. Après saisie du message, vérification de la conformité et de la véracité de l'information, l'unité centrale commande l'acquittement de la mémoire de ce poste de surveillance afin de la rendre disponible pour le passage des boucles suivantes.

L'unité centrale, qui dispose des informations "état boucle" et numéro et "état poste de surveillance" et numéro, consulte d'abord le fichier central.

Après consultation du fichier central le comportement de l'unité centrale est le suivant:

a) Concernant l'état des boucles de contrôle:

Si l'installation constate le passage des deux boucles d'une paire, cette détection ne se traduit par aucun effet ni sur le fichier central, ni sur l'unité centrale.

Si l'installation constate le passage d'une seule boucle, la deuxième étant dans ce cas coupée, cela se traduit par deux réponses possibles du poste central:

— soit la boucle coupée a déjà été annulée sur le fichier par une commande manuelle et, dans ce cas, il n'en résulte aucune action sur l'unité centrale;
— soit la boucle coupé devrait exister et, dans ce cas, l'unité centrale commande la fermeture d'un relais déterminant l'arrêt de la bande, tandis que les organes de visualisation indiquent le numéro du poste de surveillance ayant détecté cette coupure de boucle, allume le voyant précisant que cette détection a été faite sur le brin supérieur ou le brin inférieur du tapis, indique le numéro de la paire de boucles dont la boucle a été déchirée (ce numéro étant déterminé à partir des boucles de l'ensemble de référence) et allume également un voyant signalant le défaut de boucle.

b) Concernant l'état des postes de surveillance:

— Si l'information reçue est correcte, cela ne se traduit par aucune action ni sur le fichier central, ni sur l'unité centrale.
— Si l'information est erronée, deux réponses sont possibles après consultation du fichier central;
— Si le poste de surveillance considéré a été annulé au fichier central par action sur la commande manuelle, il n'en résulte aucune action sur l'unité centrale.
— Par contre, si ce poste de surveillance devait être en bon état, l'unité centrale commande la fermeture d'un relais d'alarme et détermine la visualisation du numéro du poste de surveillance en défaut, tandis que des voyants sont allumés pour mettre en évidence le défaut de ce poste de surveillance.

Outre le traitement des informations relatives à l'état des boucles de contrôle et à l'état du poste de surveillance, le poste central produit également une information dans le cas d'une absence de signal tachymétrique, ce qui empêcherait la scrutation des postes de surveillance par le poste central.

Dans ce cas, l'unité centrale commande la fermeture d'un relais de défaut et le convoyeur ne s'arrête plus sauf par une commande manuelle. Egalement, en l'absence de ce signal tachymétrique, le poste central produit l'allumage des voyants signalant, d'une part, l'existence d'un défaut dans l'installation, d'autre part, l'allumage du voyant particulier signalant le défaut de signal tachymétrique.

**Revendications**

1. Installation pour la surveillance de l'état d'un tapis sans fin d'un convoyeur entraîne par des moyens d'entraînement du tapis, l'installation comprenant:
a°) plusieurs boucles de contrôle, conductrices et fermées, disposées transversalement sur le tapis et réparties le long de ce dernier,
b°) plusieurs postes de surveillance (PS) fixes, répartis le long du convoyeur, et couplés chacun à au moins un ensemble détecteur ($E_1$, $E_2$, $C_1$, $C_2$) comportant au moins un émetteur ($E_1$, $E_2$) et un capteur correspondant ($C_1$, $C_2$) pour détecter les passages desdites boucles de contrôle au niveau de chaque poste de surveillance (PS),
c°) un poste central (PC) auquel chacun desdits postes de surveillance (PS) est relié pour transmettre des signaux comprenant une information sur l'état desdites boucles de contrôle et sur l'état de chacun desdits postes de surveillance (PS), ledit poste central (PC) comprenant:

— une unité centrale destinée à recevoir lesdits signaux,
— des moyens de commande de l'arrêt du tapis, reliés à ladite unité centrale et destinés à commander l'arrêt dudit tapis lorsque ladite unité centrale a reçu des signaux correspondant à des boucles défectueuses et/ou des postes de surveillance (PS) défectueux,
— des moyens de visualisation reliés à ladite unité centrale et destinés à indiquer l'état desdites boucles de controle et desdits postes de surveillance (PS)
— des moyens de commande manuelle, destinés à inhiber, lorsqu'ils sont actionnés, au moins un signal correspondant à une boucle de contrôle défectueuse ou à un poste de surveillance (PS) défectueux,
— des moyens automatiques, destinés à autoriser la poursuite du fonctionnement du convoyeur lorsque ladite unité centrale reçoit des signaux correspondant à des boucles de contrôle défectueuses et/ou des postes de surveillance (PS) défectueux après inhibition de ces signaux par lesdits moyens de commande manuelle,

caractérisé en ce que:

lesdites boucles de contrôle sont disposées en paires ($B_1$, $B_2$, $B_n$) de boucles espacées, les deux boucles de chaque paire ($B_1$, $B_2$, $B_n$) étant disposées transversalement sur le tapis,
chaque ensemble détecteur comporte une paire de couples émetteurs-capteurs ($E_1$, $C_1$; $E_2$ $C_2$), chacun des couples émetteurs-capteurs étant disposé sur le trajet d'une boucle de contrôle de chacune desdites paires de boucles de contrôle, afin de délivrer un signal de détection lorsqu'une boucle de contrôle non coupée passe en regard de l'une desdites paires de couples émetteurs-capteurs ($E_1$, $C_1$; $E_2$, $C_2$),
l'installation comprend de plus plusieurs paires ($R_1$, $R_2$, $R_3$) de boucles de référence, conductrices et fermées, qui sont disposées à proximité l'une de l'autre, dans le sens de la longueur sur une portion de tapis, les deux boucles de chaque paire de boucles de référence ($R_1$, $R_2$, $R_3$) étant disposées transversalement sur ladite portion de tapis, afin de donner un numéro de référence à chaque poste de surveillance (PS) et à chaque paire ($B_1$, $B_2$, $B_n$) de boucles de contrôle passant successivement en regard de chaque ensemble détecteur ($E_1$, $C_1$; $E_2$, $C_2$) couplé à chaque poste de surveillance (PS),
chaque poste de surveillance (PS) comprend une mémoire tampon destinée à stocker une information sur l'état des boucles d'une paire ($B_1$, $B_2$, $B_n$) de boucles de contrôle détectée, et un ensemble de codage destiné à produire lesdits signaux de détection, sous forme codée, chacun desdits signaux de détection codé comprenant ledit numéro de référence du poste de surveillance correspondant (PS) et ladite information sur l'état de la paire ($B_1$, $B_2$, $B_n$) de boucles de contrôle détectée et correspondante,

ladite unité centrale dudit poste central (PC) comprend une mémoire programmable, émettant, à intervalles réguliers, des signaux de scrutation codés destinés à interroger successivement lesdits postes de surveillance (PS), et recevant successivement en réponse lesdits signaux de détection codés provenant desdits postes de surveillance (PS), dont la mémoire tampon de chacun est vidée en réponse au premier signal de scrutation codé reçu après stockage d'une information correspondant à l'état d'une paire détectée ($B_1$, $B_2$, $B_n$) de boucles de contrôle,

ledit poste central (PC) comprend de plus un fichier central, relié à ladite unité centrale et comportant une mémoire active destinée à recevoir, lors de la mise en fonctionnement de l'installation, des informations relatives aux numéros de référence des paires ($B_1$, $B_2$, $B_n$) de boucles de contrôle et des postes de surveillance (PS),

lesdites informations correspondant auxdits numéros de référence et stockées dans ladite mémoire active sont comparées dans ledit poste central (PC) auxdites informations contenues dans lesdits signaux de détection codés reçus par ladite unité centrale, de sorte que lesdits moyens de visualisation, qui sont communs à toutes les paires ($B_1$, $B_2$, $B_n$) de boucles de contrôle et à tous les postes de surveillance (PS), indiquent successivement les numéros de référence et les états desdites paires de boucles de contrôle ($B_1$, $B_2$, $B_n$) ainsi qui, successivement, les numéros de référence et les états desdits postes de surveillance (PS),

ledit fichier central est relié auxdits moyens de commande manuelle, afin d'inhiber toute comparaison d'informations contenues dans un signal de détection codé, et correspondant à un numéro de référence d'une paire ($B_1$, $B_2$, $B_n$) de boucles de contrôle ou d'un poste de surveillance (PS) dont l'état a été visualisé comme étant défectueux, lorsque lesdits moyens de commande manuelle sont actionnés.

2. Installation selon la revendication 1, caractérisée en ce que ledit poste central (PC) comprend de plus des compteurs programmables, destinés à compter les nombres totaux d'impulsions reçues entre des paires de signaux successifs, correspondant à des paires successives ($B_1$, $B_2$, $B_n$) de boucles de contrôle provenant de chacun desdits postes de surveillance (PS) et reçues par ladite unité centrale, lesdits compteurs étant également destinés à comparer lesdits nombre totaux d'impulsions à des nombres totaux de référence, afin de délivrer, en cas de discordance, des signaux correspondant aux paires de boucles dont les deux boucles sont défectueuses, ladite mémoire active dudit fichier central recevant également, lors de la mise en fonctionnement de l'installation, des informations relatives auxdits nombres totaux de référence, qui correspondent aux nombres totaux de signaux de scrutation transmis à chacun des postes de surveillance (PS) entre deux signaux de détection codés successifs, correspondant à deux paires successives ($B_1$, $B_2$, $B_n$) de boucles de contrôle provenant du poste de surveillance (PS) correspondant et reçues par ladite unité centrale, lesdites informations correspondant auxdits nombres totaux de référence et stockées dans ladite mémoire active étant comparées auxdits nombres totaux d'impulsions, dont chacune correspond à un signal de scrutation codé, et qui sont comptées dans lesdits compteurs entre la réception de deux signaux de détection codés successifs, correspondant à deux paires successives ($B_1$, $B_2$, $B_n$) de boucles de contrôle détectées, de sorte que lesdits moyens de visualisation indiquent, en cas de discordance, soit le numéro d'un poste de surveillance (PS) qui est en bon état et n'a pas détecté le passage d'une paire ($B_1$, $B_2$, $B_n$) de boucles dont les deux boucles sont défectueuses, soit le numéro d'un poste de surveillance (PS) qui est en mauvais état.

3. Installation selon l'une des revendications 1 et 2, caractérisé en ce que ledit poste central (PC) comporte de plus une horloge, déterminant lesdits intervalles réguliers d'émission desdits signaux de scrutation, et une base de temps interne reliée à ladite horloge afin de produire des signaux de scrutation lorsque ledit tapis a une vitesse constante.

4. Installation selon l'une des revendications 1 et 2, caractérisée en ce que ledit poste central (PC) comporte de plus une horloge, déterminant lesdits intervalles d'émission desdits signaux de scrutation, ladite horloge étant reliée à une dynamo tachymétrique entraînée par lesdits moyens d'entraînement du tapis, afin de produire des signaux de scrutation dont la fréquence est proportionnelle à la vitesse du tapis.

5. Installation selon l'une des revendications 1 à 4, caractérisée en ce que chaque poste surveillance (PS) comporte un circuit analogique destiné à traiter les signaux issus desdits capteurs ($C_1$, $C_2$) et comprenant un étage retardateur-comparateur destiné à différencier les signaux permanents entre lesdits capteurs ($C_1$, $C_2$) et les émetteurs correspondants ($E_1$, $E_2$) des signaux produits par les passages des boucles de contrôle en regard des capteurs ($C_1$, $C_2$) pour suivre les variations lentes de niveau dudit tapis sans fin.

6. Installation selon l'une des revendications 1 à 5, caractérisée en ce que chaque poste de surveillance (PS) est couplé à deux ensembles détecteurs ($E_1$, $C_1$, $E_2$, $C_2$) dont l'un a sa paire de couples émetteurs-capteurs disposée en position adjacente au brin supérieur dudit tapis sans fin, et l'autre ensemble détecteur ($E_1$, $C_1$; $E_2$, $C_2$) a sa

paire de couples émetteurs-capteurs disposée en positions adjacente au brin inférieur dudit tapis sans fin, lesdits moyens de visualisation donnant une indication du brin supérieur ou inférieur dudit tapis sur lequel une détection a été effectuée.

7. Installation selon l'une des revendications 1 à 6, caractérisée en ce que tous les postes de surveillance (PS) sont reliés audit poste central (PC) par une unique ligne téléphonique commune et normalisée, qui transmet lesdits signaux de scrutation et lesdits signaux de détection codés.

**Patentansprüche**

1. Einrichtung zum Überwachen des Zustands eines Endlosförderbands eines mittels Antriebsvorrichtungen für das Endlosförderband angetriebenen Förderers, mit

— mehreren geschlossenen elektrisch leitenden Kontrollschleifen, die längs dem Endlosförderband verteilt auf diesem in Querrichtung angeordnet sind,

— mehreren ortsfesten Überwachungsstationen (PS) die entlang dem Förderer verteilt und jeweils mit mindestens einer Detektorgruppe ($E_1$, $E_2$, $C_1$, $C_2$) gekoppelt sind, die mindestens einen Sender ($E_1$, $E_2$) und einen entsprechenden Empfänger ($C_1$, $C_2$) aufweist, um den Durchgang der Kontrollschleifen bei jeder Überwachungsstation (PS) zu erfassen,

— einer zentralen Station (PC) mit der jede der Überwachungsstationen (PS) verbunden ist, um eine Information über den Zustand der Kontrollschleifen und über den Zustand jeder Überwachungsstation (PS) selbst enthaltende Signale zu übertragen, wobei die zentrale Station (PC) aufweist:

— eine Zentraleinheit zum Empfang dieser Signale,

— Steuerglieder zum Anhalten des Förderbands, die an die Zentraleinheir angeschlossen sind und einen Haltebefehl für das Förderband abgeben, wenn die Zentraleinheit Signale empfangen hat, die defekte Kontrollschleifen und/oder defekte Überwachungsstationen (PS) signalisieren,

— Anzeigeglieder, die an die zentrale Station angeschlossen sind und den Zustand der Kontrollschleifen und der Überwachungsstationen (PS) anzeigen,

— manuell betätigbare Steuerglieder, die bei ihrer Betätigung mindestens ein, eine defekte Kontrollschleife oder eine defekte Überwachungsstation signalisierendes Signal unterdrücken,

— automatische Glieder, die die Weiterführung des Betriebs des Förderers zulassen, wenn die Zentraleinheit defekte Kontrollschleifen und/ oder defekte Überwachungsstationen signalisierende Signale, nach der Messung dieser Signale durch die manuell betätigten Steuerglieder, empfängt,

dadurch gekennzeichnet, daß

— die Kontrollschleifen als benachbarte Schleifenpaare ($B_1$, $B_2$, $B_n$) angeordnet sind, wobei die beiden Schleifen eines jeden Paares ($B_1$, $B_2$, $B_n$) in Querrichtung auf dem Förderband angeordnet sind,

— jede Detektorgruppe ein Paar von Sender-Empfängerpaare ($E_1$, $C_1$; $E_2$, $C_2$) aufweist, wobei jedes dieser Sender-Empfängerpaare auf dem Weg einer Kontrollschleifen eines jeden Kontrollschleifenpaares angeordnet ist, um ein Erfassungssignal abzugeben, wenn eine nicht durchtrennte Kontrollschleife ein Sender-Empfängerpaar ($E_1$, $C_1$, $E_2$, $C_2$) eines der Paare passiert,

— die Einrichtung ferner mehrere Paare von leitenden geschlossenen Referenzschleifen ($R_1$, $R_2$, $R_3$) aufweist, die auf einem Bereich des Förderbands dicht benachbart zueinander in Längsrichtung des Förderbands angeordnet sind, wobei die beiden Schleifen eines jeden Paares von Referenzschleifen ($R_1$, $R_2$, $R_3$) in Querrichtung auf dem Bereich des Förderbands angeordnet sind, um jeder Überwachungsstation (PS) und jedem sukzessive an jeder jeweils mit einer Überwachungsstation (PS) verbundenen Detektorgruppe ($E_1$, $C_1$; $E_2$, $C_2$) vorbeipassierendem Kontrollschleifenpaar ($B_1$, $B_2$, $B_n$) eine Referenznummer zuzuordnen.

— jede Überwachungsstation (PS) einen Pufferspeicher zum Speichern der Information über den Zustand der Schleifen eines erfaßten Kontrollschleifenpaares ($B_1$, $B_2$, $B_n$) und eine Codiereinheit zur Erzeugung codierter Erfassungssignale aufweist, wobei jedes codierte Erfassungssignal die Refernznummer der entsprechenden Überwachungsstation (PS) und die information über den Zustand des entsprechenden erfaßten Kontrollschleifenpaares ($B_1$, $B_2$, $B_n$) enthält,

— die Zentraleinheit der zentralen Station (PC) einen programmierbaren Speicher aufweist, der in regelmäßigen Intervallen codierte Überprüfungssignale zum sukzessiven Abfragen der Überwachungsstation (PS) aussendet und als Antwort sukzessive die codierten Erfassungssignale von den Überwachungsstation empfängt, deren jeweiliger Pufferspeicher in Reaktion auf das erste, nach dem Speichern eines, den Zustand eines erfaßten Kontrollschleifenpaares ($B_1$, $B_2$, $B_n$) signalisierenden Signals empfangene Überprüfungssignal geleert wird,

— die zentrale Station (PC) ferner ein mit der Zentraleinheit verbundenes Zentralregister aufweist, das einen aktiven Speicher zum Empfangen von Informationen über Referenznummern der Paare der Kontrollschleifen ($B_1$, $B_2$, $B_n$) und der Überwachungsstation (PS) währen die Einrichtung in Betrieb geht, aufweist,

— wobei diese entsprechenden, in diesem aktiven Speicher gespeicherten Informationen in der zentralen Station (PC) mit den in den codierten Erfassungssignalen, die von der Zentraleinheit empfangen wurden, enthaltenen Informationen verglichen werden, so daß die allen Paaren von Kontrollschleifen ($B_1$, $B_2$, $B_n$) und allen Überwachungsstationen (PS) zugeordneten Anzeigeglieder sukzessive die Referenznummern und den jeweiligen Zustand der Paare der Kontrollschleifen ($B_1$, $B_2$, $B_n$) sowie sukzessive die Referenznummern und den jeweiligen Zustand der Überwachungsstation (PS) anzeigen, und
— wobei das Zentralregister an die manuell betätigbaren Steuerglieder angeschlossen ist, um einen Vergleich von Informationen, die in einem codierten Erfassungssignal enthalten sind und die einer Referenznummer eines Paares von Kontrollschleifen ($B_1$, $B_2$, $B_n$) oder eine Überwachungsstation (PS), deren Zustand als defekt angezeigt worden ist, entsprechen, zu unterdrücken, während die manuell betätigbaren Steuerglieder aktiviert werden.

2. Einrichtung nach Anspruch 1, dadurch gekennzeichnet, daß

— die zentrale Station (PC) ferner programmierbare Zähler aufweist, zum Zählen der zwischen aufeinanderfolgenden, den aufeinanderfolgenden Kontrollschleifen ($B_1$, $B_2$, $B_n$) entsprechenden und von der Zentraleinheit von jedem der Überwachungsstationen (PS) empfangenen Signalpaaren empfangenen Gesamtzahl von Impulsen,
— wobei die Zähler außerdem diese Gesamtzahlen mit den Referenzgesamtzahlen vergleichen, um bei Nichtübereinstimmung Signale, die Schleifenpaaren entsprechen, deren beiden Schleifen defekt sind, abzugeben,
— wobei der aktive Speicher des Zentralregisters während der Inbetriebnahme der Einrichtung ebenfalls Informationen über die Referenzgesamtzahlen empfängt, die den Gesamtzahlen der Prüfsignale entsprechen, die an jede der Überwachungsstationen (PS) zwischen zwei aufeinanderfolgenden codierten, zwei aufeinanderfolgenden Kontrollschleifen ($B_1$, $B_2$, $B_n$ entsprechenden und von der Zentraleinheit von der entsprechenden Überwachungsstation empfangenen Erfassungssignalen gesendet werden,
— wobei die den Referenzgesamtzahlen entsprechenden und im aktiven Speicher gespeicherten Informationen mit den Gesamtzahlen der Impulse verglichen werden, von denen jeder einem codierten Prüfsignal entspricht und die in den Zählern zwischen dem Empfang zweier aufeinanderfolgender Erfassungssignale gezählt werden, die zwei erfaßten aufeinanderfolgenden Kontrollschleifen ($B_1$, $B_2$, $B_n$) entsprechen, so daß die Anzeigeglieder die Nichtübereinstimmung entweder die Nummer einer Überwachungsstation (PS), die im funktionsfähigen Zustand ist und nicht das Passieren eines Paares von Schleifen ($B_1$, $B_2$, $B_n$), deren beiden Schleifen defekt sind, oder die Nummer einer betriebsunfähigen Überwachungsstation anzeigen.

3. Einrichtung nach Anspruch 1 oder 2, dadurch gekennzeichnet, daß die zentrale Station (PC) einen Taktgeber, der die regelmäßigen Intervalle der Aussendung der Prüfsignale bestimmt und einen internen Zeitbasisgenerator aufweist, der an den Taktgeber geschaltet ist, um Prüfsignale zu erzeugen, wenn das Förderband mit konstanter Geschwindigkeit bewegt wird.

4. Einrichtung nach Anspruch 1 oder 2, dadurch gekennzeichnet, daß die zentrale Station (PC) einen Taktgeber aufweist, der die regelmäßigen Intervalle der Aussendung der Prüfsignale bestimmt und an einen Drehzahlgeber angeschlossen ist, der von dem Antriebsvorrichtungen des Förderbands angetrieben wird, um Prüfsignale zu erzeugen, deren Frequenz proportional zur Geschwindigkeit des Förderbands ist.

5. Einrichtung nach einem der Ansprüche 1 bis 4, dadurch gekennzeichnet, daß jede Überwachungsstation (PS) eine Analogschaltung aufweist, die die von dem Empfängern ($C_1$, $C_2$) abgeleiteten Signale aufbereitet und eine Verzögerer-Vergleicher-Stufe aufweist, die die permanenten Signale zwischen den Empfängern ($C_1$, $C_2$) und den entsprechenden Sendern ($E_1$, $E_2$) differenziert, wobei die Signale durch das Passieren der Kontrollschleifen an den Empfängern ($C_1$, $C_2$) vorbei, erzeugt werden, um langsamen Änderungen der Höhe des Endlosförderbands zu folgen.

6. Einrichtung nach einem der Ansprüche 1 bis 5, dadurch gekennzeichnet, daß jede Überwachungsstation (PS) and zwei Detektorgruppen ($E_1$, $C_1$; $E_2$, $C_2$) gekoppelt ist, wobei das Paar von Sender-Empfänger-Einheiten einer Gruppe benachbart zum oberen Strang des Endlosförderbands und das Paar von Sender-Empfänger-Einheiten der anderen Gruppe benachbart zum unteren Strang des Endlosförderbands angeordnet sind und die Anzeigeglieder einer Anzeige bezüglich des oberen oder unteren Strangs liefern, je nach dem auf welchem Strang eine Messung ausgeführt worden ist.

7. Einrichtung nach einem der Ansprüche 1 bis 6, dadurch gekennzeichnet, daß alle Überwachungsstationen (PS) mit der zentralen Station (PC) über eine einzige gemeinsame normierte Telefonleitung verbunden sind, die die Prüfsignale und die codierten Meßsignale übermittelt.

**Claims**

1. An installation for monitoring the state of an endless belt of a conveyor and powered by the means for driving the belt, the installation comprising:

a plurality of conducting and closed control loops disposed transversely on the belt and distributed along the belt,

a plurality of fixed/monitoring stations (PS) distributed along the conveyor and each coupled to at least one detector unit ($E_1$, $E_2$, $C_1$, $D_2$) comprising at least one transmitter ($E_1$, $E_2$) and a

corresponding pick-up $(C_1, C_2)$ to detect the passage of said control loops at the level of each monitoring station (PS).

a central station (PC) to which each of said monitoring stations (PS) is connected, to transmit signals carrying information on the state of said control loops and on the state of each of said monitoring stations (PS), said central station (PC) comprising:

— a central unit adapted to receive said signals,

— a means for controlling the stoppage of the belt, connected to said central unit and adapted to control the stoppage of said belt when said central unit has received signals representing defective loops and/or defective monitoring stations (PS).

— display means connected to said central unit and adapted to indicate the state of said control loops and of said monitoring stations (PS),

— manual control means adapted, when actuated, to inhibit at least one signal corresponding to a defective control loop or to a defective monitoring station (PS), and,

— automatic means adapted to authorise the continuation of the operation of the conveyor when said central unit receives signals representing defective control loops and/or defective monitoring stations (PS) after the inhibition of these signals by said manual control means, characterised in that:

said control loops are disposed in spaced pairs of loops $(B_1, B_2, B_n)$, the two loops of each pair $(B_1, B_2, B_n)$ being disposed transversely on the belt,

each detector unit comprises a pair of transmitter-pick-up couples $(E_1, C_1; E_2, C_2)$, each of the transmitter-pick-up couples being disposed in the path of one control loop of each of said pairs of control loops in order to deliver a detection signal when an uncut control loop passes opposite one of said pairs of transmitter-pick-up couples $(E_1, C_1; E_2, C_2)$,

the installation further comprises a plurality of pairs conducting and closed reference loops $(R_1, R_2, R_3)$ which are disposed close to one another in the lengthwise direction over a portion of the belt, the two loops of each pair of reference loops $(R_1, R_2, R_3)$ being disposed transversely on said portion of belt, in order to give a reference number to each monitoring station (PS) and each pair of control loops $(B_1, B_2, B_n)$ passing successively opposite each detector unit $(E_1, C_1; E_2, C_2)$ coupled to each monitoring station (PS),

each monitoring station (PS) comprises a buffer store adapted to store information on the state of the loops of a detected pair of control loops $(B_1, B_2, B_n)$ and a coding unit adapted to produce said detection signals, in coded form, each of said coded detection signals comprising said reference number of the corresponding monitoring station (PS) and said information on the state of the detected and corresponding pair of control loops $(B_1, B_2, B_n)$,

said central unit of said central station (PG) comprises a programmable store transmitting, at regular intervals, coded scrutinizing signals adapted to interrogate said monitoring stations (PS) successively and receiving successively, in reply, said coded detection signals originating from said monitoring stations (PS), the buffer store of each of which is cleared in response to the first coded scrutinizing signal received after the storage of information corresponding to the state of a detected pair of control loops $(B_1, B_2, B_n)$,

said central station (PC) further comprises a central file connected to said central unit and comprising an active store adapted to receive, when the installation is set in operation, information relating to the reference numbers of the pairs of control loops $(B_1, B_2, B_n)$ and of the monitoring stations (PS),

said information corresponding to said reference numbers and stored in said active store is compared, in said central station (PC), with said information contained in said coded detection signals received by said central unit in such a manner that said display means, which are common to all the pairs of control loops $(B_1, B_2, B_n)$ and to all the monitoring stations (PS), indicate successively the reference numbers and the states of said pairs of control loops $(B_1, B_2, B_n)$ as well as, successively, the reference numbers and the states of said monitoring stations (PS), and,

said central file is connected to said manual control means in order to inhibit any comparison of information contained in a coded detection signal and corresponding to a reference number of a pair of control loops $(B_1, B_2, B_n)$ or of a monitoring station (PS) and the state of which has been displayed as being defective, when said manual control means are actuated.

2. An installation as claimed in Claim 1, characterised in that said central station (PC) further comprises programmable counters adapted to count the total number of pulses received between pairs of successive signals, corresponding to successive pairs of control loops $(B_1, B_2, B_n)$ and received by said central unit originating from each of said monitoring stations (PS), said counters being likewise adapted to compare said total numbers with total reference numbers in order to deliver, in the event of disagreement, signals corresponding to the pairs of loops of which the two loops are defective, said active store of said central file likewise receiving, when the installation is set in operation, information relating to said total reference numbers which correspond to the total numbers of scrutinizing signals transmitted to each of the monitoring stations (PS) between two successive coded detection signals, corresponding to two successive pairs of control loops $(B_1, B_2, B_n)$ and received by said central unit originating from the corresponding monitoring station (PS), said information corresponding to said total reference numbers and stored in said active store being compared with said total numbers of pulses, each of which corresponds to a coded scrutinizing signal, and which are counted in said counters between the reception of two successive coded detection signals, corresponding to two successive pairs of detected control loops ($B_1$, $B_2$, $B_n$) in such a manner that said display means indicate, in the event of disagreement, either the number of a monitoring station (PS) which is in good order and has not detected the passage of a pair of loops ($B_1$, $B_2$, $B_n$) of which the two loops are defective, or the number of a monitoring station (PS) which is out of order.

3. An installation as claimed in Claim 1 or Claim 2, characterised in that said central station (PC) further comprises a clock determining said regular intervals of transmitting said scrutinizing signals, and an internal time base connected to said clock in order to produce scrutinizing signals when said belt has a constant speed.

4. An installation as claimed in Claim 1 or Claim 2, characterised in that said central station (PC) further comprises a clock determining said regular intervals of transmitting said scrutinizing signals, said clock being connected to a tachometric dynamo driven by said means for driving the belt in order to produce scrutinizing signals of which the frequency is proportional to the speed of the belt.

5. An installation as claimed in any of Claims 1 to 4, characterised in that each monitoring station (PS) comprises an analogue circuit adapted to process the signals leaving said pick-ups ($C_1$, $C_2$) and comprising a delay-comparator stage adapted to differentiate the permanent signals between said pick-ups ($C_1$, $C_2$) and the corresponding transmitters ($E_1$, $E_2$) from the signals produced by the passages of the control loops opposite the pick-ups ($C_1$, $C_2$) to follow the slow variations in level of said endless belt.

6. An installation as claimed in any of Claims 1 to 5, characterised in that each monitoring station (PS) is coupled to two detector units (E, C, E, C) of which one has its pair of transmitter-pick-up couples disposed in a position adjacent to the upper run of said endless belt and the other has its pair of transmitter-pick-up couples disposed in a position adjacent to the lower run of said endless belt, said display means giving an indication of which of the upper or lower run of said belt has been subject to detection.

7. An installation as claimed in any of Claims 1 to 6, characterised in that all the monitoring stations (PS) are connected to said central station (PC) by a single, common, standardized telephone line which transmits said scrutinizing signals and said coded detection signals.

Fig.1

**POSTE DE SURVEILLANCE (PS)**

*Fig.2*

**POSTE CENTRAL DE COMMANDE (PC)**

0 048 188